# EUROPEAN PATENT APPLICATION

(11) **EP 4 604 014 A1**
(43) Date of publication of application: **20.08.2025**
(21) Application number: 24158204.8
(22) Date of filing: 16.02.2024
(51) Int. Cl.: G06N 3/045, G06N 3/049, G06N 3/065, G06N 3/084

(54) **NEURAL NETWORK ARCHITECTURE**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

Some examples of for training a neural network, wherein the neural network comprises a plurality of interconnected neurons, comprise receiving input data at a first neural network unit of the neural network and processing the input data using the first neural network unit to produce an output, a neural network unit comprising one or more of the neurons. Assign a first frequency to the first neural network unit and assign a second frequency associated to the second neural network unit. A difference value between the first frequency and the second frequency is determined and is used as an attention mechanism by, scaling the output of the first neural network unit in relation to the determined difference.

## Description

The present disclosure relates to neural network architectures. In particular, the present invention relates to signal entrainment to accelerate the training of neural networks.

### BACKGROUND

In computational neural networks, feature attention is increasingly used to provide a mechanism by which a neural network can learn on which parts of an input data sequence it should focus at a given point in the learning task.

The field of computational neural networks has expanded with the development of the Transformer architecture, which has a broad range of applications, such as image synthesis, speech and image processing. Transformer architectures rely on the concept of attention and self-attention to teach a neural network on which parts of an input sequence to focus.

Whilst Transformer architectures can enhance computational neural network results, they add significant computational cost and complexity to a neural network architecture.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In a first aspect of the disclosed technology, there is a computer-implemented method for training a neural network, wherein the neural network comprises a plurality of interconnected neurons, the method comprising:
receiving input data at a first neural network unit of the neural network and processing the input data using the first neural network unit to produce an output, a neural network unit comprising one or more of the neurons;
assign a first frequency to the first neural network unit;
assign a second frequency associated to the second neural network unit;
determining a difference value between the first frequency and the second frequency; and
using the determined difference as an attention mechanism by, scaling the output of the first neural network unit in relation to the determined difference.

By adjusting, for each neural network unit in the neural network, the scaling outputs of the neural network unit based on a difference value between a frequency associated with the neural network and a second frequency associated with the second neural network unit, the principle of entrainment may be used to reduce the amount of computation processing that is required to process input data for completing a given task. By analysing the difference between an assigned frequency for two neural network units, a measure of synchronisation can be determined, thereby indicating features on which a neural network should give greater or less attention. This relies on the biological principle of neural entrainment to assess resonance between two neural network units when scaling outputs of a subsequent neural network unit of the two neural network units, leading to an acceleration of the training process of the neural network and a reduction in the size of the neural network architecture. Preferably the first frequency is assigned to the neural network unit using a local oscillator of the neural network unit and the second frequency is assigned to the second neural network unit using a local oscillator of the second neural network unit. Using local oscillator units gives a practical and efficient way to assign the frequencies to the different neural network units.

In some preferred example embodiments, using the determined difference as an attention mechanism happens only in response to the determined difference being less than a threshold.

Whilst attention in Transformer architectures is a powerful tool, training Transformer-based models requires a significant amount of processing power and computing resources. Scaling outputs of a neural network unit where the determined difference provides a method of training a neural network to be able to perform complex tasks and focus on important features from an input data sequence without relying on computationally-heavy transformer architecture.

In some preferred example embodiments, the method comprises for each neural network unit, associating an initial frequency with the neural network unit using the local oscillator of the neural network unit. Assigning an initial frequency using the local oscillator of the neural network units provides a way in which frequencies can be assigned to the neural network units of the neural network. In some preferred embodiments, the respective local oscillators are hardware components.

In some preferred example embodiments, determining the difference value based on the first frequency and the second frequency comprises performing a phase comparison between the first frequency and the second frequency.

In some preferred example embodiments, the method further comprises selecting a frequency encoding scheme to encode data for input to the neural network, wherein a period of the frequency encoding scheme is proportional to an attribute of the input data, and setting an initial frequency of one or more of the local oscillators in relation to the frequency of the frequency encoding scheme. In some preferred embodiments, the frequency encoding scheme comprises a position encoding scheme or a spike encoding

In some preferred embodiments, the frequencies of the local oscillators are set according to any of: characteristics of the input data, random values.

In some preferred example embodiments, the method further comprises using the determined difference as an additional input for a subsequent layer.

In some preferred example embodiments, the neural network is a transformer neural network and the additional input comprises an attention input for the subsequent layer.

In some preferred embodiments, the method further comprises training the neural network using backpropagation and, in response to criteria being met indicating training is incomplete, increasing a value of the threshold.

In some examples the input data is image data and the method comprises training the neural network to perform object recognition; or wherein the input data is an audio signal and the method comprises training the neural network to perform speech recognition. The attention mechanism is useful for image data where particular parts of an image, such as foreground objects, are to be attended to. The attention mechanism is useful for speech recognition where particular parts of an audio signal such as from a speaking person are to be attended to relative to background noise.

Another aspect of the disclosed technology comprises computer-implemented method of performing a machine learning task, the method comprising:
receiving input data corresponding to the machine learning task;
inputting the input data to a trained neural network, wherein the trained neural network comprises a plurality of interconnected neurons and first neural network unit and a second neural network unit, each neural network unit comprising one or more of the neurons;
using the trained neural network, generating an output associated with the machine learning task, by processing the input data through the neural network and applying an attention mechanism by:.
   assign a first frequency to the first neural network unit;
   assign a second frequency associated to a second neural network unit, the second neural network unit being closer to an input of the neural network than the first neural network unit;
   determining a difference value between the first frequency and the second frequency; and
   using the determined difference as the attention mechanism by, scaling outputs of the first neural network unit in relation to the determined difference.

In some preferred example embodiments, using the determined difference as an attention mechanism happens only in response to the determined difference being less than a threshold.

In some preferred example embodiments, the trained neural network is configured to determine the difference by performing a phase comparison.

Another aspect of the disclosed technology comprises an apparatus, the apparatus comprising:
one or more processors; and
a memory that stores one or more programs configured to be executed by the one or more processors, the one or more programs including instructions to perform a method according to embodiments described herein.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 illustrate schematically an overview of a neural network in a training and inference phase;
FIG. 2 illustrates an exemplary method of training a neural network;
FIG. 3 is a schematic diagram of the training of a neural network;
FIG. 4 illustrations an exemplary diagram showing in more detail a method of training a Transformer neural network;
FIG. 5 is a schematic diagram showing an operating environment.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

Feature attention within large computational neural networks is a challenge within modern neural network tasks. The field of computational neural networks has expanded with the development of Transformer architectures, which are able to be applied across a broad range of computational neural network domains, e.g. image synthesis, speech and image processing. One of the key algorithmic developments used by Transformers is the concept of Attention and Self-Attention. Attention and Self-Attention are mechanisms by which a neural network is able to learn on which parts of an input data sequence to focus at a given point in a learning task.

Whilst Attention algorithms enhance the results obtainable by computational neural networks, they add significant computational cost and complexity to the neural architecture. Moreover, the use of attention algorithms can be opaque to analysis.

As described herein, the present embodiments provide a novel approach to the problem of how a computational neural network can focus on selected elements of an input data sequence. Computational neural networks trained in accordance with the embodiments described herein may be used in a variety of fields, such as image synthesis, speech processing, audio signal processing, video compression, detecting anomalies in telemetry data from communications networks, voice mail signal compression, voice over internet protocol packet sequence analysis, clustering algorithms and image processing.

Aspects of the disclosed technology are based on the process of synchronisation between groups of artificial neurons. In biology, there is evidence to suggest that biological neurons utilise the synchronisation of signals between both individual neurons, and groups of neurons, in order to achieve coherent states that give meaning to external input from sensory inputs. The disclosed technology mimics this biological process in order to create more efficient complex neural networks.

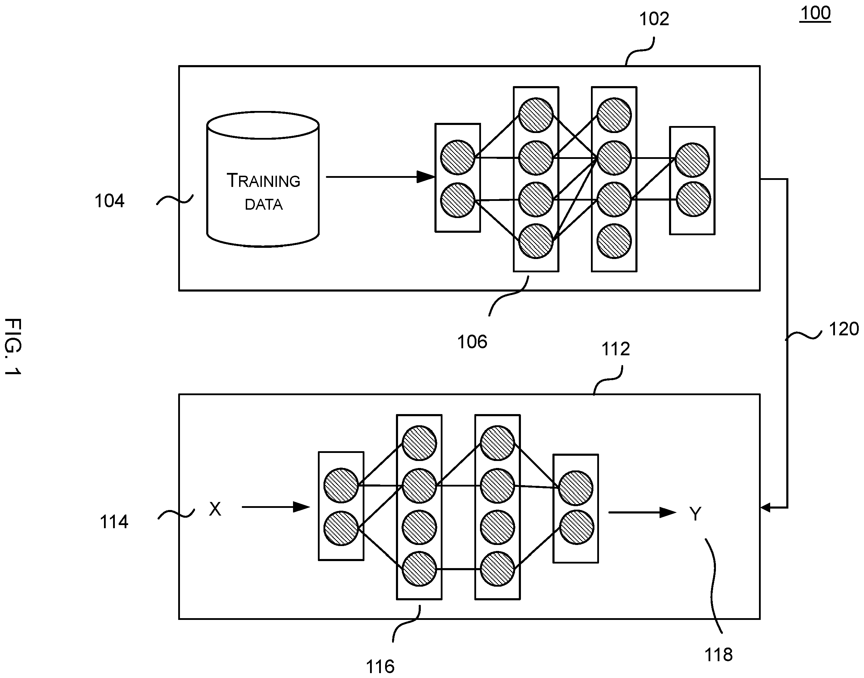

Figure 1 of the accompanying drawings shows an exemplary system 100 in which various embodiments of the present applications may be practised. In the exemplary system 100, there is a training phase 102 and an inference phase 112. The training phase 102 is shown linked to the inference phase by arrow 120. In the training phase 102, training data 104 is input into a computational neural network 106. Any suitable type of training is used such as supervised training or unsupervised training. In an example the training is achieved using a backpropagation process such as the Adam process or other well-known backpropagation process. The neural network is generic and may take different forms, such as artificial neural network, convolutional neural network, recurrent neural network, feed forward neural network, multi-layer perceptron and the like. Following training of the neural network 106, the trained neural network 116 may be used in the inference phase 112. In the inference phase 112, input data 114 is input at a first layer of the trained neural network 116 and an output 118 is output by a final layer of the trained neural network 116.

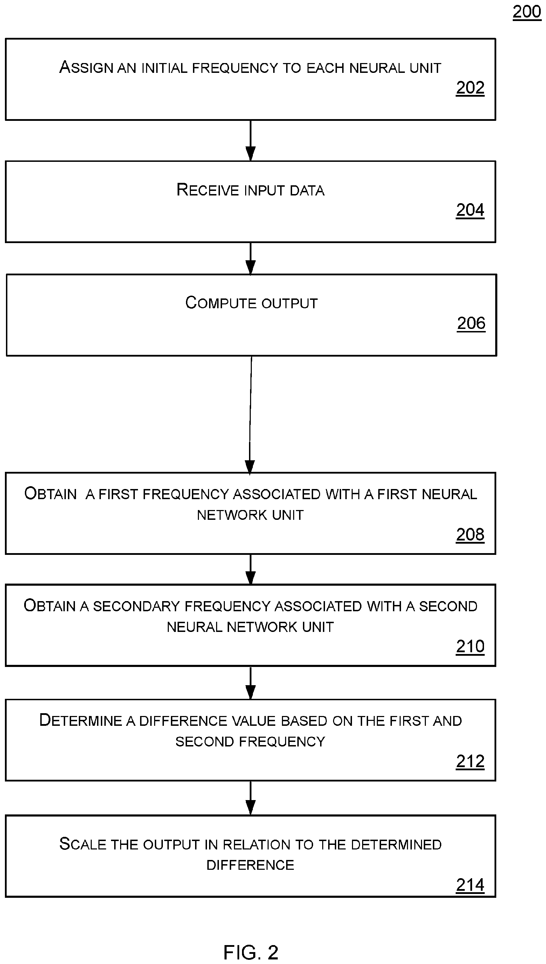

FIG. 2 is an exemplary method 200 of training a neural network comprising a plurality of layers of nodes. Training data is input 202 into the first layer of the neural network. The training data may be labelled or unlabelled. Additionally, the input data may be complex or real data - i.e. any data that can be processed by a neural network.

The neural network comprises a plurality of neural network units. For each neural network unit in the neural network, an initial frequency is assigned 204 to the respective neural network unit. This process may be applied to all neural network units once data is input into the neural network. In various examples, the initial frequency which is assigned to the neural network units is based on the received input. For example, the initial frequency may be a function of the input data sequence. The initial frequency which is assigned may also be a function of time and/or of position. For example, where the initial frequency is position-based, it may use existing trigonometric position encoding. Similarly, where the input data has a temporal dimension, the frequency may be time-based. Where the initial frequency which is assigned to each neural unit is a function of time, the neural network architecture is able to encode dynamic temporal signals within the neural array, where a neural array is a network of interconnected neurons. The majority of existing neural networks are static neural arrays which makes adding dynamic temporal states within existing neural network architectures complex and which makes reverse analysis of neural network behaviour more difficult.

As used herein, a neural network unit may be a single neuron, a group of neurons within a layer of neurons, a layer of neurons or group of layers of neurons. A group of neurons is a plurality of neighbouring neurons. A group of neurons within a layer of neurons is some but not all neurons in the layer and where the neurons in the group are neighbours. A group of layers of neurons is a plurality of layers of neurons where the layers are neighbouring. Advantageously, the frequency of a neural network unit may differ from the frequency of other neural network units to allow the neural network to focus on certain features. For example, the neural network may focus on larger areas at the earlier layers of the neural network (by using larger neural network units) and then progressively focus on smaller areas to assess finer details (by using smaller neural network units which have fewer neurons than larger neural network units).

In some examples, the frequency of the neural network units is selected to be in the same range as the input data variance. Additionally, or alternatively, the frequency is selected to be a function of the input data. The frequency assigned to each neural network unit changes per neural network unit (e.g. per layer where the neural network unit is a layer) as the frequency of the neural network unit is shifted to track the incoming signal from earlier neural network units. By changing the initial seed frequency of a neural network unit, it is possible to change the frequency to which the neural network unit attends. If features in the input data are not correlated, then the neural network units will not entrain to the signal.

The initial frequency may be assigned in a number of different ways. For example, an initial frequency within a known range of the training task to be completed may be selected at random within the range. Where the training task relates to speech recognition, an initial frequency within a range of typical human speech may be selected. As another example, where the training task relates to image processing, such as processing 10 by 10 pixel parts of images, the initial frequency may be set to this size.

As another example, the initial frequency which is assigned to the neural network units may be learned during the training phase, along with the weights of the neural network. For example, during training of the neural network, the frequencies assigned to each neural network unit may be adapted such that they are aligned with the range of the input data.

When assigning the initial frequencies to the respective neural network units, the initial frequencies may be selected to obey the Nyquist criterion. That is, the initial frequency is at least double a rate of change in the input data sequence. This may be set by a knowledge of a likely signal rate of change or resolution. This is particularly advantageous, for example, for fast changing temporal input signals.

In various examples, the initial frequencies are optionally assigned to the respective neural network units using local oscillators. In an example there is one local oscillator per neural network unit. The local oscillator frequency may be selected to be in the same range as the input data variance. The frequency of the local oscillator may additionally or alternatively be a function of the input data. The frequency of the local oscillator changes per neural network unit (e.g. per layer) as the local oscillator shifts its frequency to track the incoming signal from earlier neural network units. By changing an initial seed frequency of a neural network unit, the frequency to which it attends may be changed.

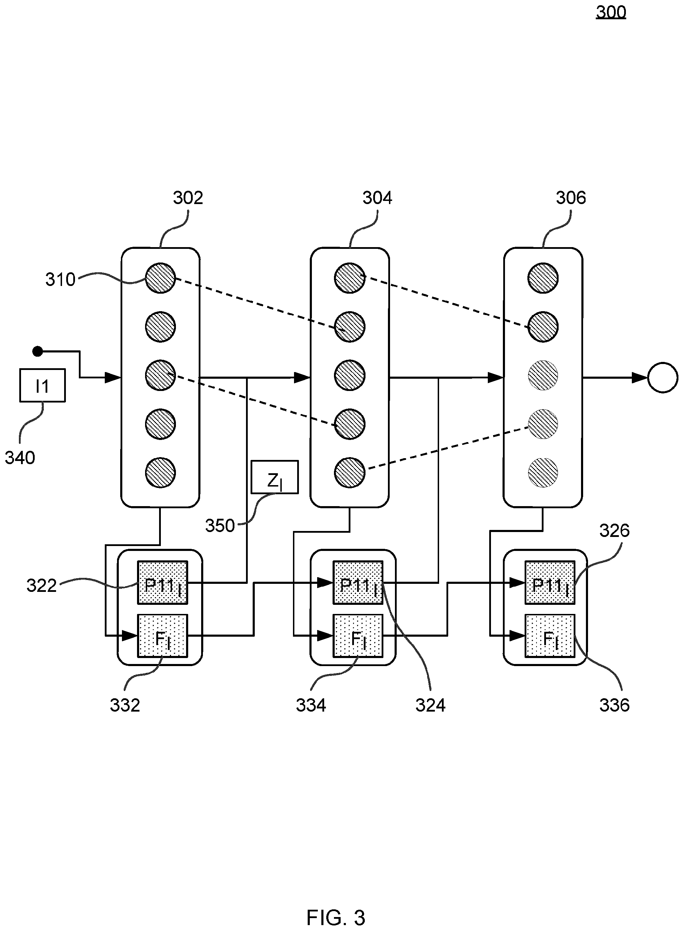

Additionally, parameters of the local oscillators may be selected to ensure entrainment is possible. If input data features are not correlated, the local oscillators may not entrain to the input data and an entrainment signal (e.g. phase entrainment signal 350 in FIG. 3) will not be created.

The local frequency oscillators may be static or variable (e.g. vary with position and/or time). For example, where the local frequency oscillators are static, the phase of the oscillator may be adapted to reach entrainment.

The local oscillators may be electronic oscillators combined with a mixer to modify the frequency of the local oscillator at each neural network unit. The local oscillators may be implemented in either software or hardware. Where the local oscillators are implemented in software, any mathematical oscillator function may be used. Where the local oscillators are implemented in hardware, LC components in a circuit may be used, increasing the ease with which the present technology may be integrated into a chip.

As another option which may be used as an alternative, or in addition, to local frequency oscillators, spiking neurons may be used as the neurons in the neural network. As spiking neurons typically have a built-in frequency, a local oscillator is not required.

Optionally, a frequency encoding scheme is used to determine a frequency to assign to the neural network units, wherein a period of the frequency encoding scheme is proportional to an attribute of the input data, such as, but not limited to, sentence length, a feature of interest, audio signal phoneme, convolution window size for images, pixel groups, lines, blocks etc. By selecting the frequency to be based on a feature of interest in a task to be completed, a neural network is trained to force neural network units within the neural network to have amplified activity where it processes data which is of interest or which it is tasked to analyse. Frequency encoding schemes such as positional encoding or spike encoding (number of times a data point causes a neuron or neural unit to fire) may be used. Where a local frequency oscillator is used, the frequency of the local frequency oscillator may be a function of an encoder period. In this case a positional encoding scheme is used to encode an input data sequence for input to a neural network and the positional encoding scheme uses a sin or cos function encoding. The Sin or Cos function encoding has a period and the frequency of the local oscillator may be related to the period of the encoder i.e. the period of a Sin or Cos function encoding of the encoder.

In the case of positional encoding, trigonometric functions such as sin or cos functions may be used. Therefore, unlike in standard Transformers where the scale of the positional encoding is fixed, the period of the encoding is related to, and in some cases, proportional to an attribute of the data.

Spike encoding may also be used to encode the frequencies using the input data.

In an example where each neural unit is one layer of a neural network (only one layer and a complete layer) the following process occurs during training. For each layer 206 of the neural network, a first frequency associated with a current layer of nodes is obtained 208 (from a local oscillator of the layer) and a second frequency associated with a previous layer of nodes is obtained 210 (from a local oscillator of the layer). The previous layer need not be the immediately preceding layer and may be any preceding layer in the neural network. For example, an entrainment signal may be cross-coupled across multiple layers. This is particularly useful in neural networks with feedback paths or in Resnets. Moreover, where the current layer is the first layer of the neural network, a second frequency associated with the previous layer comprises a pre-selected frequency which may be determined from the input sequence or which may be learned during training of the neural network, or may be set to a default value or selected at random.

A difference value based on the first frequency and second frequency is determined 212. There are numerous ways in which the difference value may be determined 212. In one example, the difference in frequency between the first and second frequency is determined.

In another example, the difference in phase between the first and second frequency is determined. The difference between the phase of the first and second frequency may be determined using a phase comparator. As described herein, a phase comparator is an analogue multiplier, logic circuit or frequency mixer that generates a signal representing a difference in phase between two signal inputs. In some cases the phase comparator is implemented in software or firmware rather than hardware. In an example there is one phase comparator per neural network unit.

Similarly, a frequency difference may be used as the difference value and a frequency comparator may be used to determine the difference in frequency between the first and second frequency. A frequency comparator is an analogue multiplier, logic circuit or frequency mixer that generates a signal representing a difference in frequency between two signal inputs. In some cases the frequency comparator is implemented in software or firmware rather than hardware. In an example there is one frequency comparator per neural network unit.

Using the determined difference value, one or more outputs associated with the current layer are adjusted 214. For example, where the determined difference value is smaller than a threshold, outputs associated with the current layer are scaled so as to be increased. Additionally or alternatively, where the determined difference value is greater than or equal to a threshold, the outputs associated with the current layer may be decreased.

Where a determined difference value is compared to a threshold, this threshold may be determined in several ways. In one example, the threshold may be determined experimentally by increasing the threshold from 0 until resonance between the first frequency signal of the current layer and the second frequency signal of the previous layer is no longer present. Additionally or alternatively, the threshold may be predetermined using attributes from the input data sequence. For example, with speech processing, it is known that auditory neurons entrain to signals around 4.5 kHz. Therefore, a threshold within a tolerance of a known attribute of the input data may be selected. When selecting or determining the threshold, the threshold is chosen to be small enough so that signal entrainment (resonance) occurs but not too small that the output from the neurons will drift and never settle. Where characteristics of the input data are known, the value of the predetermined threshold may be set prior to training. However, it may additionally or alternatively be modified during training. As used herein, signal entrainment is where the difference value between two signals is minimised such that there is a resonance between the two signals. For example, entrainment occurs where the frequency or phase of two or more entities are locked together.

Scaling the outputs associated with the layers of the neural network based on the determined difference leads to the neural network mimicking the biological process of signal entrainment. For example, where the determined difference value is a phase difference between the first and second frequencies, signal entrainment occurs where the two signals are phase locked within a predetermined threshold. Similarly, where the determined difference value is a frequency difference between the first and second frequencies, signal entrainment occurs where the two signals are frequency locked within the predetermined threshold.

By training the neural network to assign a greater or lower value (i.e. by scaling outputs of the neural network units) to layers of the neural network based on their signal entrainment, resonance of a neural network may be exploited. That is, by comparing the first and second frequency, it is possible to quantitatively determine whether the current layer has activity which is of relevance to the outputs of the previous layer. Relevant activity leads to an augmentation of the signal (i.e. by scaling the outputs of that layer) such that features of relevance are processed more efficiently and irrelevant activity leads to a suppression of the signal (i.e. by scaling the outputs of that layer) such that computational power is not wasted on data which is not relevant to a given machine learning task.

Moreover, where the frequency assigned to each neural network unit is a function of time, the neural network is able to entrain with time dependent signals. This provides a means to accelerate the training phase for time varying dynamic signals such as speech signals, video signals and other time varying signals. Additionally, by using signal entrainment, a resulting frequency signal can be monitored, and when neural network units entrain, the locked frequencies can easily be observed or determined. A developer may therefore know which part of a machine learning model is attending to a given signal, thereby reducing the problem of machine learning models being opaque to analysis.

The method described above with reference to FIG. 2 is extended in some cases where there is more than one neural unit per neural network layer. In this case self attention may be implemented by determining the difference in frequency between neural units in the same layer.

Once the neural network is trained, the trained model may be used for inference, as depicted in FIG. 1. Such a trained model can be implemented in software or analogue hardware, for example, using on-chip LC oscillator circuits. Implementing the training of and/or inference using the neural network using analogue hardware provides a significant acceleration of training and using the neural network. Moreover, as additional higher-lever processing is avoided, a more efficient and accelerated training process is provided by the technology disclosed herein, thereby reducing the overall architecture of the neural network. The reduction in network size also provides the benefit that runtime memory is saved.

FIG. 3 illustrates an exemplary diagram of the training of a neural network 300 according to the disclosed technology. In this example, the neural network 300 comprises three layers 302, 304 and 306, with each layer comprising one or more neurons 310. Whilst three layers are depicted, the neural network may have fewer or greater numbers of layers. Attached to each layer 302, 304, 306 is a respective entrainment unit comprising a local frequency oscillator 332, 334, 336 and phase comparator 322, 324, 326. The respective local frequency oscillators and phase comparators may be implemented in hardware or in software.

In FIG. 3, input data 340 is input into the first layer 302 of the neural network 300. The input data may comprise a sequence of data items or may comprise an individual item of data. A local frequency module 332, 334, 336 is then used to assign an initial frequency to each neural network unit. As an example, different coupling methods may be employed at each neural network unit, which is per layer in this example. Where signal inhibition is desired, one or more neural network units may be assigned initial frequencies such that they remain out of phase with the input signal.

A local frequency oscillator module 332, 334, 336 with an initial frequency is assigned to each neural network layer 302, 304, 306.

The frequency signal of each neural network layer 302, 304, 306 is passed to the phase comparator 322, 324, 326 of a subsequent neural network layer 302, 304, 306. At the phase comparator 322, 324, 326, it is determined whether the frequency value from the current neural network layer 302, 304, 306 has entrained with the frequency value from the previous neural network layer 302, 304, 306. Determining whether the frequency value of a current neural network layer (e.g. layer 304) has entrained with that from a previous neural network layer (e.g. layer 302) may comprise performing a threshold comparison to compare the phase difference between the frequency values of layers 302, 304 with respect to a threshold value. The smaller the difference between the frequency values from, e.g., layers 302 and 304, the closer the two signals are and hence the greater the degree of entrainment between the two signals.

If the phase difference between the frequency values of a current and previous layer is smaller than the threshold difference, then outputs associated with the current layer are increased. Additionally or alternatively, if the phase difference between the frequency values of a current and previous layer is greater than or equal to the threshold difference, the outputs associated with the current layer are decreased.

Optionally, if there is entrainment between the frequencies associated with neural network layers 302 and 304, the degree of phase entrainment 350 may be input into a subsequent layer (e.g. neural network layer 306) as a measure of attention, such as by acting as a scaling factor scaling inputs to the subsequent layer. The degree of phase entrainment may be, for example, the phase difference between two sets of frequencies.

The degree of phase entrainment 350 is denoted herein as a phase entrainment signal 350. This phase entrainment signal can be thought of as a bias which scales the activation signals emanating from a preceding layer prior to their input to a subsequent layer. This provides the benefit that such entrainment indicates that the associated input data requires attention by these neurons.

The phase-attention process of using a phase entrainment signal may be repeated across as many neural layers as required. The same process may also be applied within a layer rather than between layers to achieve a self-attention affect.

The example of FIG. 3 is for the case where a neural unit is a whole single layer of a neural network. The example of FIG. 3 is extended to architectures where a neural unit is part but not all of a neural network layer so that a single layer has more than one neural unit in some examples. There is one local oscillator per neural unit and one phase comparator per neural unit.

Additionally, whilst FIG. 3 illustrated with respect to a phase comparator and depicts phase-based entrainment, the exemplary diagram depicting training of the neural network may instead use a frequency-based comparator such that frequency-based entrainment is used.

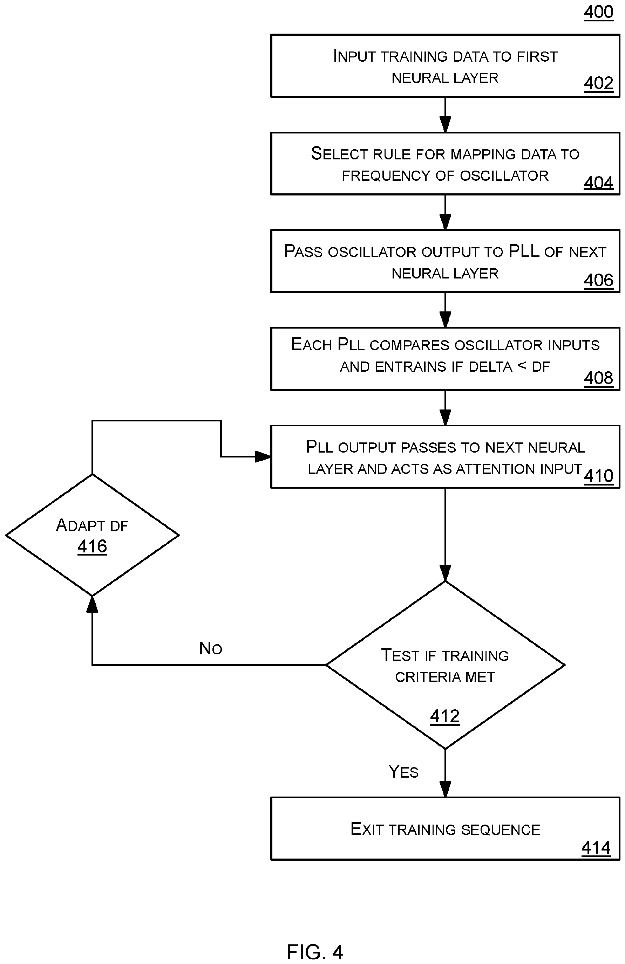

FIG. 4 depicts an exemplary method 400 of the disclosed technology applied to a neural network. In operation 402, training data is input into a first neural layer, where a neural layer is a neural unit. A rule for mapping data to frequency of an oscillator, for each neural network unit of the neural network, is then selected 404. Examples of the mapping rules that may be used for mapping the data to the frequency of the oscillator comprise position encoding and spike encoding.

For each neural network unit, the output of the frequency oscillator is input 406 to a phase comparator (denoted PLL in FIG. 4) of a subsequent neural network layer. Each phase comparator of a respective neural network unit compares the current neural network layer oscillator frequency with that of a previous neural network layer oscillator frequency and entrains 408 where a phase difference between the respective oscillator frequencies is less than a threshold value (denoted df). As described herein, the current neural network layer is made to entrain where the respective oscillator frequencies have a phase difference less than a threshold value df by increasing or scaling upwards outputs associated with the current neural network layer. Alternatively, where a phase difference between the respective oscillator frequencies is greater than a threshold value df, outputs of a current neural network layer are suppressed by decreasing one or more outputs associated with the current neural network layer.

Where entrainment occurs for a given neural network layer, the phase comparator of the given neural network layer passes 410 its output, the entrainment signal, to a subsequent neural network layer. This entrainment signal acts as an attention signal.

At operation 412, it is tested whether a training criteria is met. If the training criteria is met then the training sequence is exited 414. In an example, the training criterion is met when the entrainment signal from each neural network unit is above a threshold i.e. convergence is reached. If the training criteria is not met, then df is adapted 416 by increasing the size of df so that phases that are further apart will become entrained. The increment size for increasing df is a hyperparameter of the neural network training such as a learning rate.

The example of FIG. 4 is extended to architectures where a neural unit is part but not all of a neural network layer so that a single layer has more than one neural unit in some examples.

Training a neural network according to the technology described herein leads to a self-organising entrainment design. For a given category of input data sequence (e.g. image processing, audio processing etc.), the neural network will use a measure of difference between the frequency of a current layer and the frequency of a previous layer. Using this difference value, the activations of one or more neurons are adjusted such frequency signals which indicate relevant activity between two neural network units are amplified and/or signals which indicate irrelevant activity between two neural network units are suppressed. In the case where the distance value is a phase difference, a phase locked loop may be used. In the case where the distance value is a frequency distance, a frequency locked loop may be used.

Owing to the self-organising structure, no weight training is required, provided that a delta criteria (df in FIG. 4) is met - that is, that the shifts in frequency are small increments.

During inference, input data is received at the first layer of a neural network trained according to the technology disclosed herein. The neurons in the trained neural network have the weights which were learnt from the training process. As the input data is processed by the respective neural network units in the trained neural network, a frequency associated with the neural network unit and the input data is generated. Owing to the trained weights, where a current neural network unit generates a frequency for the received input data which is sufficiently close to (e.g. within a threshold) of the frequency generated by a previous neural network unit for the input data, the output of the current neural network unit will be amplified. This process is repeated for all neural network units in the trained neural network, resulting in a cascading (resonance) of signals which have relevance to a first set of weights that triggered a first frequency of interest.

Therefore, when a trained neural network processes data, neurons in the neural network will have amplified neural activity in proportion to the particular signal it should find of interest. This leads to a robust and resilient system as the trained neural network is self-adjusting. Features within an input data sequence which are not of interest will quickly be supressed by the neural network as the frequency associated with them will not resonate with the frequency associated with the trained weights whilst features within the input data sequence which are of relevance will resonate and have an amplified signal within the neural network.

The technology disclosed herein has a variety of applications. In one example, the disclosed technology may be used to improve clustering algorithms. For example, within an image, there may be different categories of objects which are to be classified, with each category of object being a cluster. Similarly, within a large body of text, there will be different topics, each topic being a cluster. Due to the semantic difference between different clusters within the data to be analysed, each cluster may have a different frequency of interest. Therefore, it is possible to identify whether a given feature belongs to a cluster based on whether there is resonance or entrainment with that cluster.

In standard clustering algorithms, a K-means algorithm is typically used where a defined number of clusters is pre-specified and the K-means algorithm updates the coordinates of each data point in order to move them closer to more related data points. In contrast, using the technology described herein, each data point may be assigned an initial frequency, for example, using a local frequency oscillator. By iterating the mode, for example, as depicted in FIG. 4, data points which are similar will entrain whilst there will not be resonance between different data points. Additionally, each data point may be assigned to a new data point in the cluster space, based on its degree of synchronisation with neighbouring data points.

The disclosed technology may also be applied to outputs of computational neural network systems in order to track time-varying inferences, e.g. the disclosed technology may operate as an attention focussing system. Modelled on the human brain, the brain uses attention mechanisms to enable it to focus on selected tasks. This also uses the selective defocussing of background signals and tracking of critical signals related to a target task. This operates at a level above that of pattern recognition and signal classification. The disclosed technology enables defocussing by entraining on an output of a computational neural network by entraining on relevant features of the computational neural network output. Advantageously, defocussing may be achieved without additional training of the weights of the computational neural network. As a non-limiting example, where a computational neural network is used for image processing, and its output includes background noise, the output of the computational neural network is used in combination with the technology disclosed herein so that relevant features of the image may be focussed upon whilst defocussing on the background noise without requiring retraining of the weights of the computational neural network.

Further applications of the disclosed technology include image processing. In such an example, the training data comprises images to be processed. The initial frequency assigned to the neural network unit will also be based on an image processing task to be completed using the training data. For example, features of interest derived from the training task are used to assign the initial frequency to the neural network units such that features within the data which resonate with the features of interest lead to an augmentation of the output of the neural network units.

In an example the training data is the publicly available Imagenet dataset and the task is object recognition. Supervised learning is used to train the neural network and the attention mechanism made available through the use of the local oscillators enables the training process to be more efficient, as compared to using classic supervised learning without any attention mechanism.

Similarly, the disclosed technology may be applied to audio processing. In the example of speech recognition, it has been determined that biological neurons in part of the human cortex oscillate at 4.5 kHz, which is a similar frequency to that of human speech. Therefore, when performing speech recognition using the disclosed technology, an initial frequency may be assigned to the neural network units which is known using prior knowledge of the environment to be relevant. This enables the neural network to entrain on neural network activity which is of relevance to the frequency of interest.

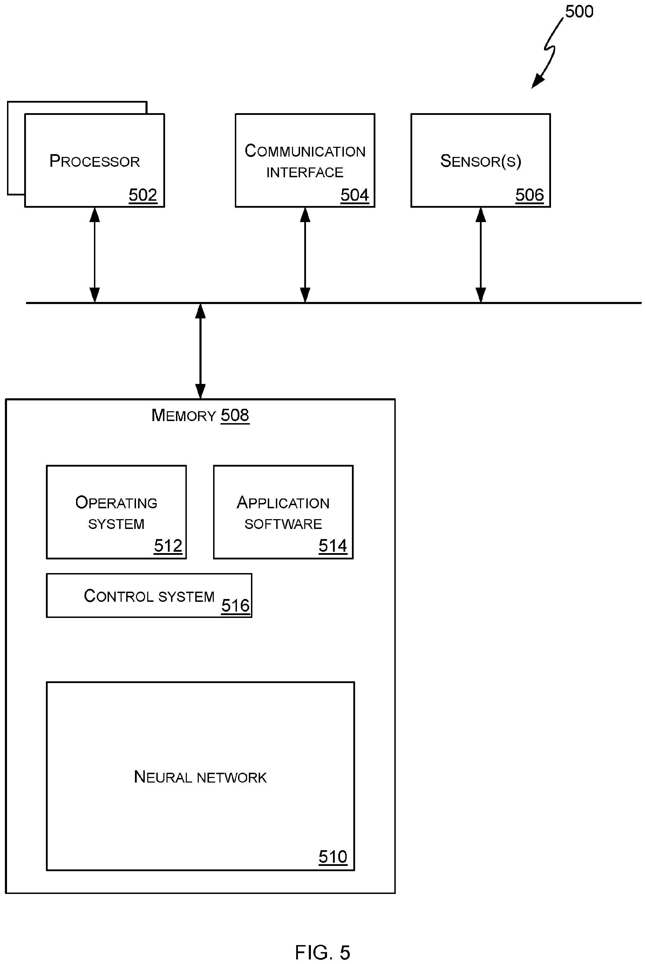

FIG. 5 illustrates various components of an example computing device 500 in which embodiments of the neural network training and the trained neural network are implemented in some examples. The computing device is of any suitable form such as a smart phone, a desktop computer, an unmanned aerial vehicle, a tablet computer, a laptop computer and a communications network node.

The computing device 500 comprises one or more processors 502 which are microprocessors, controllers or any other suitable type of processors for processing computer executable instructions to control the operation of the device in order to perform the methods of figures 1 to 4. In some examples, for example where a system on a chip architecture is used, the processors 502 include one or more fixed function blocks (also referred to as accelerators) which implement a part of the method of figures 1 to 4 in hardware (rather than software or firmware). That is, the methods described herein are implemented in any one or more of software, firmware or hardware. The computing device has a data store holding neural network 510. Neural network 510 may be an untrained or a trained neural network. The computing device optionally has sensors 506 to receive input data from the environment. Platform software comprising an operating system 512 or any other suitable platform software is provided at the computing-based device to enable application software 514 to be executed on the device. Although the computer storage media (memory 508) is shown within the computing-based device 500 it will be appreciated that the storage is, in some examples, distributed or located remotely and accessed via a network or other communication link (e.g. using communication interface 504).

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The term "set" refers to one or more items and does not include the empty set.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer-implemented method for training a neural network, wherein the neural network comprises a plurality of interconnected neurons, the method comprising:
receiving input data at a first neural network unit of the neural network and processing the input data using the first neural network unit to produce an output, a neural network unit comprising one or more of the neurons;
assign, a first frequency to the first neural network unit;
assign a second frequency to a second neural network unit;
determining a difference value between the first frequency and the second frequency; and
using the determined difference as an attention mechanism by scaling the output of the first neural network unit in relation to the determined difference.

2. The method as claimed in claim 1, wherein the first frequency is assigned to the neural network unit using a local oscillator of the neural network unit and wherein the second frequency is assigned to the second neural network unit using a local oscillator of the second neural network unit.

3. The method as claimed in claims 1 or 2, wherein using the determined difference value as an attention mechanism happens only in response to the determined difference being less than a threshold.

4. The method as claimed in claim 2, comprising, for each neural network unit, associating an initial frequency with the neural network unit using the local oscillator of the neural network unit; and optionally where the local oscillators are hardware components

5. The method as claimed in claims 2 to 4, further comprising:
selecting a frequency encoding scheme to encode data for input to the neural network, wherein a period of the frequency encoding scheme is proportional to an attribute of the input data, and setting an initial frequency of one or more of the local oscillators in relation to the frequency of the frequency encoding scheme.

6. The method of claim 5, wherein the frequency encoding scheme comprises a position encoding scheme or a spike encoding.

7. The method as claimed in claims 2 to 6, wherein the frequencies of the local oscillators are set according to any of: characteristics of the input data, random values.

8. The method of any preceding claim, wherein determining the difference value between the first frequency and the second frequency comprises performing a phase comparison between the first frequency and the second frequency.

9. The method of any preceding claim, further comprising:
using the determined difference as an additional input for a subsequent layer.

10. The method as claimed in claim 9, wherein the neural network is a transformer neural network and wherein the additional input comprises an attention input for the subsequent layer.

11. The method as claimed in any of claims 2 to 10 comprising training the neural network and, in response to criteria being met indicating training is incomplete, increasing a value of the threshold.

12. The method as claimed in any of claims 2 to 10, wherein the input data is image data and the method comprises training the neural network to perform object recognition; or wherein the input data is an audio signal and the method comprises training the neural network to perform speech recognition.

13. A computer-implemented method of performing a machine learning task, the method comprising:
receiving input data corresponding to the machine learning task;
inputting the input data to a trained neural network, wherein the trained neural network comprises a plurality of interconnected neurons and first neural network unit and a second neural network unit, each neural network unit comprising one or more of the neurons;
using the trained neural network, generating an output associated with the machine learning task, by processing the input data through the neural network and applying an attention mechanism by:
assign, a first frequency to the first neural network unit;
assign a second frequency to a second neural network unit, ;
determining a difference value between the first frequency and the second frequency; and
using the determined difference as the attention mechanism by, scaling outputs of the first neural network unit in relation to the determined difference.

14. The method of claim 13, wherein using the determined difference as an attention mechanism happens only in response to the determined difference being less than a threshold.

15. An apparatus comprising:
one or more processors; and
a memory that stores one or more programs configured to be executed by the one or more processors, the one or more programs including instructions to perform a method according to any of claims 12 to 14.
